# FASCICULE DE BREVET EUROPEEN

(11) **EP 3 899 765 B1**
(45) Date de publication et mention de la délivrance du brevet: **29.05.2024**
(21) Numéro de dépôt: 19839369.6
(22) Date de dépôt: 09.12.2019
(51) Int. Cl.: G06F 21/34, G06F 21/45

(54) **RÉINITIALISATION D'UN SECRET APPLICATIF AU MOYEN DU TERMINAL**
NEUINITIALISIERUNG EINES ANWENDUNGSGEHEIMNISSES ÜBER DAS ENDGERÄT
REINITIALIZATION OF AN APPLICATION SECRET BY WAY OF THE TERMINAL

(30) Priorité: 17.12.2018 FR 1873099
(43) Date de publication de la demande: 27.10.2021
(73) Titulaire: Orange, 92130 Issy-les-Moulineaux (FR)
(72) Inventeur: DUMANOIS, Antoine, 92326 CHÂTILLON CEDEX (FR)
(86) Numéro de dépôt international: PCT/FR2019/052963
(87) Numéro de publication internationale: WO 2020/128215

(56) Documents cités:
- WO-A1-2015/135063
- WO-A1-2017/053577
- WO-A1-2018/017019

## Description

### DOMAINE DE L'INVENTION

La présente invention concerne le domaine de l'authentification d'un utilisateur sur un terminal. Elle concerne plus particulièrement la réinitialisation des facteurs nécessaires à l'authentification d'un utilisateur sur une application exécutée par un terminal.

### ETAT DE LA TECHNIQUE

Les applications pour terminaux demandent en général aux utilisateurs de définir des secrets applicatifs pour en contrôler l'accès. Ces secrets sont typiquement des mots de passe et sont parfois perdus et doivent être réinitialisés.

Afin de permettre la réinitialisation d'un secret applicatif et d'assurer la cohérence de la sécurité du service de bout en bout, les applications doivent alors utiliser d'autres preuves d'identité que le secret « oublié » pour accepter la réinitialisation.

Les techniques les plus couramment utilisées aujourd'hui consistent, au moment de la création et de l'enregistrement d'un compte utilisateur, en la définition de facteurs de preuve additionnels, consistant souvent en des facteurs de possession externe, comme : une adresse email, un numéro de téléphone, des questions secrètes, un "dongle" physique externe, une clé de récupération (complexe pour plus d'entropie). WO2017/053577 A1 et WO2015/135063 A1 constituent des documents pertinents sur l'état de la technique.

Ces solutions ne sont toutefois pas satisfaisantes. En effet, un certain nombre de limitations existent, liées à la facilité d'usage (par exemple stocker de façon sécurisée et avoir toujours à disposition une clé de récupération complexe) ou à la sécurité (par exemple une adresse email est souvent synchronisée sur le terminal sur lequel la réinitialisation est tentée).

### EXPOSE DE L'INVENTION

Un but de l'invention est de pallier les inconvénients pré-cités. L'invention est définie par les revendications indépendantes.

Selon un premier aspect, l'invention concerne un procédé de réinitialisation d'un secret applicatif d'une application exécutée par un terminal, ledit terminal comprenant une infrastructure de sécurité configurée pour gérer de manière sécurisée des données d'authentification d'un utilisateur par le terminal, l'application étant connectée à un serveur d'application, le secret applicatif permettant à l'utilisateur de s'authentifier sur l'application, ledit procédé comprenant après que l'utilisateur a requis une réinitialisation du secret applicatif depuis l'application, les étapes suivantes mises en oeuvre par l'infrastructure de sécurité :
- réception d'une requête d'un traitement cryptographique d'un élément de vérification au moyen d'un élément de réinitialisation du secret applicatif préalablement stocké dans l'infrastructure de sécurité ;
- authentification de l'utilisateur à partir d'au moins une donnée entrée par l'utilisateur pour l'authentifier sur le terminal sans aucune donnée propre à l'application et une donnée d'authentification stockée dans l'infrastructure de sécurité ; et si l'utilisateur est authentifié par l'infrastructure de sécurité :
- traitement cryptographique de l'élément de vérification du secret applicatif de manière à obtenir un élément de validation de la réinitialisation ;
- envoi vers l'application de l'élément de validation de la réinitialisation pour que le serveur d'application valide l'élément de validation de la réinitialisation et, le cas échéant, exécute un processus de réinitialisation du secret applicatif.

La réinitialisation d'un secret applicatif d'une application utilise un élément de réinitialisation stocké dans le terminal dans son environnement sécurisé. En outre, l'accès à cet élément de réinitialisation peut être configuré pour nécessiter l'authentification de l'utilisateur sur le terminal exécutant l'application. Ainsi, l'utilisateur utilise l'authentification sur son terminal pour réinitialiser le secret applicatif. Il n'y a donc pas besoin pour l'utilisateur de renseigner un élément de réinitialisation propre à l'application puisque on s'appuie sur des secrets associés au terminal déjà définis par l'utilisateur et contrôlant l'accès à son environnement sécurisé.

Selon un premier mode de réalisation l'élément de vérification est généré par le serveur d'application et fourni à l'avance au terminal, en anticipation d'une demande de réinitialisation du secret applicatif. Ainsi, l'élément de vérification est un élément de vérification crypté et stocké dans le serveur d'application et l'élément de réinitialisation est une clé de cryptage stockée dans l'infrastructure de sécurité, l'étape de traitement consistant, selon ce premier mode de réalisation, à décrypter, au moyen de la clé de cryptage, l'élément de vérification crypté.

Selon un deuxième mode de réalisation, l'élément de vérification est généré par le serveur d'application suite à une demande de réinitialisation du secret applicatif sans être fourni à l'avance au terminal. Ainsi, l'élément de réinitialisation est un premier élément de cryptage stocké dans l'infrastructure de sécurité, un deuxième élément de cryptage étant stocké dans le serveur d'application, l'étape de traitement consistant à signer par le premier élément de cryptage l'élément de vérification, l'élément de vérification ainsi signé étant transmis au serveur d'application afin que ce dernier en vérifie la validité au moyen du deuxième élément de cryptage

Selon ce deuxième mode de réalisation le premier élément de cryptage et le deuxième élément de cryptage sont des éléments de cryptage symétrique du type clés publiques. En variante, le premier élément de cryptage et le deuxième élément de cryptage sont des éléments de cryptage asymétriques, le premier élément de cryptage étant de préférence une clé privée et le deuxième élément de cryptage étant une clé publique. Le choix de clés symétriques ou asymétriques dépend du niveau de sécurité, des clés asymétriques étant plus robustes que des clés symétriques.

Toujours selon le premier aspect, en complément, et pour augmenter le niveau de sécurité au cours de l'authentification de l'utilisateur il est prévu une authentification au moyen d'un élément externe au terminal. De manière avantageuse, un élément externe est du type "dongle" ou carte SIM ou eSIM ou profil eSIM ou numéro de téléphone.

Selon un deuxième aspect, l'invention concerne un procédé de génération d'un élément de réinitialisation d'un secret applicatif d'une application exécutée par un terminal, ledit terminal comprenant une infrastructure de sécurité configurée pour gérer et stocker de manière sécurisée des données d'authentification de l'utilisateur par le terminal, l'application étant connectée à un serveur d'application, le procédé comprenant à la première exécution de l'application, l'utilisateur étant authentifié sur l'application, les étapes suivantes mises en oeuvre par l'infrastructure de sécurité :
- réception d'une demande de génération d'un élément de cryptage ;
- génération de l'élément de cryptage, ledit élément de cryptage comprenant au moins une première partie ;
- stockage de la première partie dans l'infrastructure de sécurité, ladite première partie constituant l'élément de réinitialisation.

La génération d'un élément de réinitialisation est automatique est n'est fondée que sur l'authentification de l'utilisateur. Il n'y a pas besoin pour ce dernier de prévoir un élément autre qu'un élément lui permettant de s'authentifier sur le terminal.

Selon un premier mode de réalisation, l'élément de cryptage comprend une unique première partie et est une clé de cryptage, ledit procédé comprenant une étape de transmission à l'application d'un élément de vérification, l'élément généré étant une clé de cryptage, le procédé comprenant le cryptage de l'élément de vérification, la transmission à l'application de l'élément de vérification ainsi crypté qui est destiné à être stocké.

Selon ce premier mode de réalisation, un élément de vérification est défini à l'avance et stocké pour être utilisé dans le cas d'une réinitialisation du secret applicatif.

Avantageusement, selon ce premier mode de réalisation, préalablement à la génération de l'élément de cryptage le procédé comprend une étape d'authentification de l'utilisateur à partir d'au moins une donnée entrée par l'utilisateur et une donnée d'authentification stockée dans l'infrastructure de sécurité. Une telle authentification permet de sécuriser l'accès du terminal à l'infrastructure de sécurité du terminal.

Selon un deuxième mode de réalisation, l'élément de cryptage est un couple d'éléments de cryptage comprenant une première partie et une deuxième partie, le procédé comprenant la transmission à l'application de la deuxième partie qui est destinée à être transmise au serveur d'application.

De manière complémentaire, le couple d'éléments de cryptage est soit à base d'éléments publics ou privés, là encore en fonction du niveau de sécurité exigé.

Ainsi, selon une première variante, les éléments du couple d'éléments de cryptage sont des éléments de cryptage asymétriques, le premier élément de cryptage étant une clé publique et le deuxième élément de cryptage étant une clé privée, l'élément de cryptage privé étant stocké dans l'infrastructure de sécurité, l'élément de cryptage public étant transmis au serveur d'application.

Selon une deuxième variante, les éléments du couple d'éléments de cryptage sont des éléments de cryptages symétriques, un des deux éléments étant stocké dans le module de sécurité, l'autre étant transmis au serveur d'application.

Selon l'une ou l'autre des deux variantes, l'élément de réinitialisation est un élément de cryptage stocké dans l'infrastructure de sécurité, et rien n'est stocké dans l'application.

Selon un troisième aspect, l'invention concerne un procédé de gestion d'un accès à une application exécuté par un terminal comprenant une infrastructure de sécurité configurée pour gérer et stocker de manière sécurisée des données d'authentification de l'utilisateur par le terminal, l'application étant connectée à un serveur d'application et étant accessible au moyen d'un secret applicatif susceptible d'être réinitialisé au moyen d'un procédé selon le premier aspect de l'invention, mettant en oeuvre un élément de réinitialisation obtenu au moyen d'un procédé selon le deuxième aspect de l'invention.

Selon un quatrième aspect, l'invention concerne une infrastructure de sécurité d'un terminal configurée pour mettre en oeuvre un procédé selon le premier aspect ou le deuxième aspect.

Selon un cinquième aspect, l'invention concerne un produit programme d'ordinateur comprenant des instructions de code de programme pour l'exécution des étapes d'un procédé selon le premier aspect de l'invention, ou un procédé selon le deuxième aspect de l'invention, lorsque ce procédé est exécuté par un processeur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1]

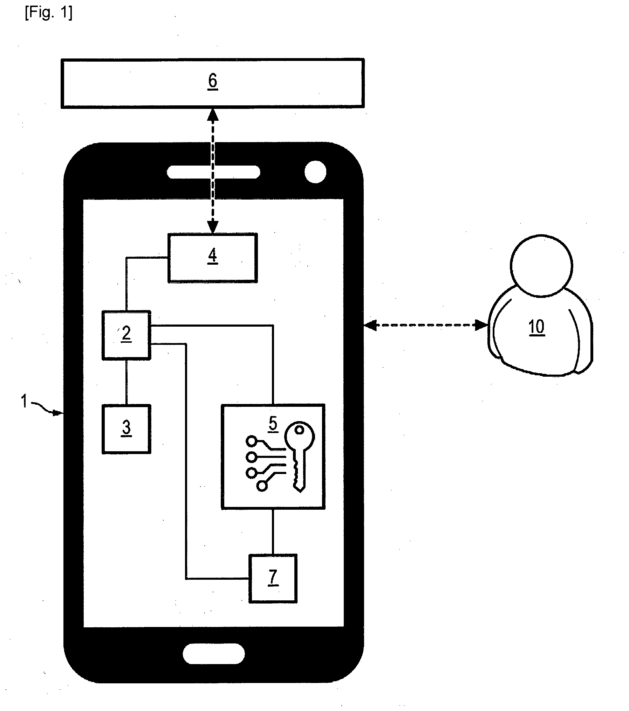

   La figure 1 illustre de façon schématique une architecture mise en oeuvre dans l'invention ;
[Fig. 2]

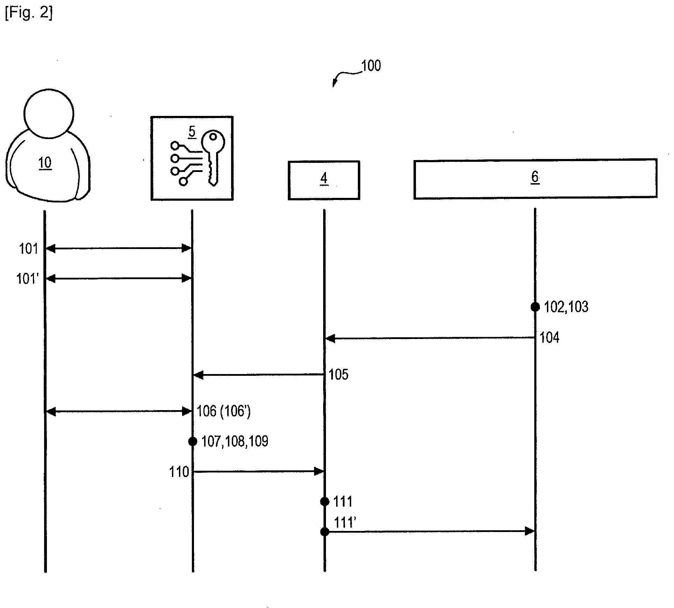

   La figure 2 est un organigramme d'étapes d'un procédé de génération d'un élément de réinitialisation selon un premier mode de réalisation de l'invention.
[Fig. 3]

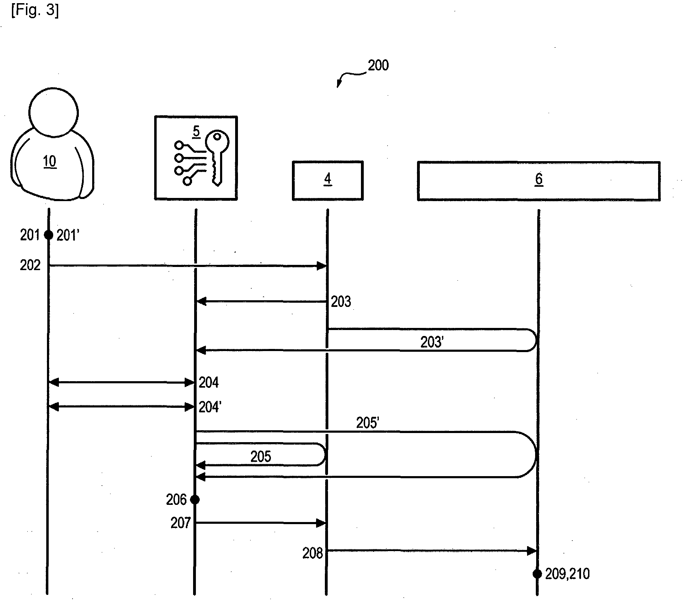

   La figure 3 illustre est un organigramme d'étapes d'un procédé de réinitialisation d'un secret applicatif selon un premier mode de réalisation de l'invention.
[Fig. 4]

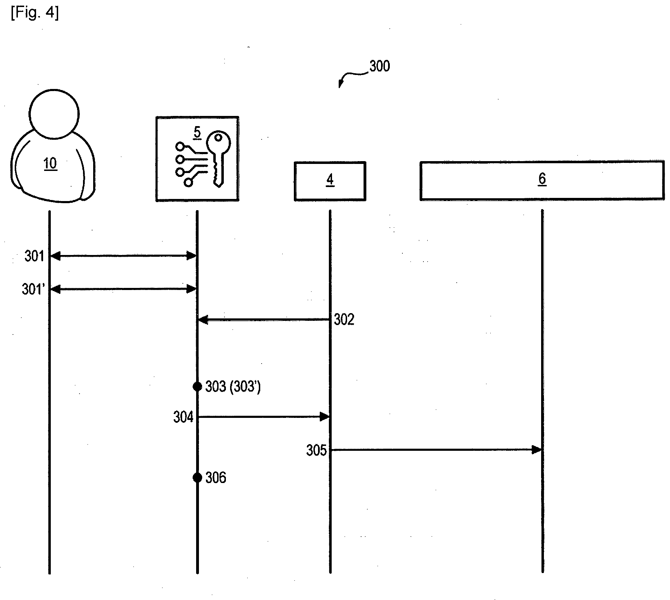

   La figure 4 est un organigramme d'étapes d'un procédé de génération d'un élément de réinitialisation selon un deuxième mode de réalisation de l'invention.
[Fig. 5]

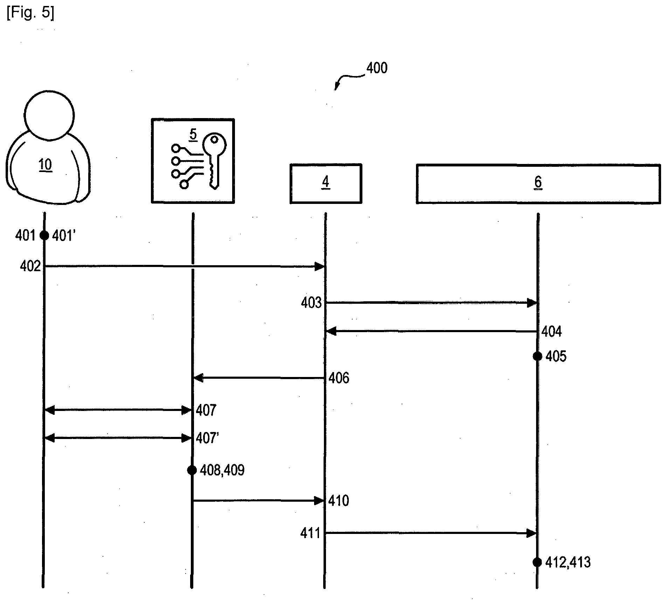

   La figure 5 illustre est un organigramme d'étapes d'un procédé de réinitialisation d'un secret applicatif selon un deuxième mode de réalisation de l'invention.

### DESCRIPTION DETAILLEE DE L'INVENTION

En référence à la **figure 1****,** un terminal 1 tel qu'un smartphone (téléphone intelligent en français) ou une tablette comprend un système d'exploitation 2 exécuté par un processeur 3 et une ou plusieurs applications 4 exécutées par le système d'exploitation 2. Le terminal 1 comprend également une interface utilisateur 7 permettant à un utilisateur de coopérer avec le terminal 1 notamment pour s'authentifier. Cette interface 7 est par exemple l'écran tactile du terminal ou bien un capteur d'empreinte digitale ou encore une caméra pour mettre en oeuvre une reconnaissance faciale. Le terminal 1 comprend en outre une infrastructure de sécurité 5 pour la gestion (stockage notamment) de différentes données d'authentification d'un utilisateur sur le terminal 1. L'interface 7 peut être connectée directement à l'infrastructure de sécurité 5 et pas au système d'exploitation ou alors au système d'exploitation et à l'infrastructure de sécurité 5 ou alors seulement au système d'exploitation. L'infrastructure de sécurité 5 peut être exécutée de façon logicielle par le processeur 3 ou sur une partie du processeur 3 isolée virtuellement de manière matérielle (voir les architectures TEE) ou bien sur partie matérielle isolée et dédiée. De telles données d'authentifications sont par exemple : un code PIN, une empreinte digitale, de l'iris ou faciale (le terminal comprenant des capteurs biométriques), une signature manuscrite sur un écran tactile (que ce soit un trajet effectué avec le doigt ou un styler sur un canevas), ou une vraie signature faite avec le doigt ou un stylet dans un cadre, la reconnaissance de la voix, de la respiration, des battements du coeur, etc., ou des informations liées au comportement du client (habitudes applicatives, géographiques ou autre; façon de mouvoir ses doigts sur l'écran ou de bouger son corps, etc.), ou un dispositif, dit "dongle", à associer au terminal 1 au moyen d'une connectique dédiée, par exemple un port USB. Ces données, bien que sécurisées sont en général « réduites » c'est-à-dire transformées avant leur stockage, à la fois pour faciliter le processus de reconnaissance lors de l'authentification et pour limiter la valeur de réutilisation pour un pirate qui réussirait à avoir accès aux données stockées. C'est le système d'exploitation du terminal 1 qui contrôle les accès aux différents éléments du terminal 1 mais l'élément 5 peut gérer sa propre sécurité et ses propres contrôles d'accès. Le but est qu'il reste ainsi inviolé même si le système d'exploitation 2 venait à être piraté.

L'application 4 est connectée à un serveur d'application 6 distant ou intégré à l'application 4 elle-même. L'application 4 et le serveur d'application 6 constituent un ensemble applicatif. Dans le cas où le serveur d'application 6 est à distance, l'application 4 communique avec le serveur via une connexion Internet par exemple.

Pour accéder à l'application 4 l'utilisateur 10 dispose d'un secret applicatif tel qu'un mot de passe. Ce mot de passe est associé à l'identité de l'utilisateur 10 et est créé à la première connexion de l'utilisateur 10 sur l'application 4.

En même temps que l'utilisateur 10 crée pour la première fois son mot de passe un élément de réinitialisation est généré (voir la génération d'un élément de réinitialisation selon un premier ou un deuxième mode de réalisation décrite ci-après). Cet élément de réinitialisation permet à l'utilisateur 10, lorsqu'il requiert une réinitialisation de son accès à l'application, de le récupérer. En particulier, lorsque l'utilisateur a « perdu » son mot de passe une telle réinitialisation du secret applicatif est initiée (voir la réinitialisation d'un secret applicatif selon un premier ou un deuxième mode de réalisation décrite ci-après). En pratique cela se traduit par une requête en réinitialisation du mot de passe effectuée depuis l'application par l'intermédiaire du terminal 1 de l'utilisateur 10.

Cet élément de réinitialisation est créé à la première exécution de l'application par le terminal 1 dès que l'utilisateur 10 est identifié correctement sur cette dernière. De manière avantageuse et non limitative, l'invention est basée sur la mise oeuvre d'un élément de réinitialisation stocké par le terminal dans l'infrastructure de sécurité 5 pour la réinitialisation du secret applicatif. L'élément de réinitialisation peut être généré et mis en oeuvre de plusieurs manières comme détaillé ci-après.

### Premier mode de réalisation

### Génération de l'élément de réinitialisation

Un procédé de génération 100 d'un élément de réinitialisation selon un premier mode de réalisation est illustré sur la **figure 2****.**

Dans ce premier mode, un élément de vérification est généré par le serveur d'application 6 et fourni à l'avance à un terminal 1, en anticipation d'une demande de réinitialisation du secret applicatif.

La génération de l'élément de réinitialisation a lieu à la première exécution de l'application sur le terminal 1 lorsque l'utilisateur s'est correctement identifié sur l'application au moyen du secret applicatif (étape 101).

Dès que l'utilisateur s'est correctement identifié sur l'application, le serveur d'application 6 génère (étape 102) un élément de vérification qui est un élément à crypter. Une copie de cet élément à crypter est stockée (étape 103) dans le serveur d'application 6 et sera utilisée au cours de la réinitialisation du secret applicatif (comme on le verra par la suite). Une fois l'élément de vérification généré et stocké, le serveur d'application 6 l'envoie (étape 104) à l'application. L'application 4 demande alors à l'infrastructure de sécurité 5 de le crypter (étape 105).

Cette double requête a pour conséquence que l'infrastructure de sécurité 5 va devoir générer, sur demande de l'application 4, une clé de cryptage dont l'utilisation requiert l'authentification préalable de l'utilisateur sur son terminal. Une clé de cryptage est par exemple une clé AES (Advanced Encryption Standard, ou norme de chiffrement avancé) générée dans l'infrastructure de sécurité 5 et ne le quitte jamais. Elle servira à chiffrer le secret de réinitialisation puis à le déchiffrer.

Comme l'infrastructure de sécurité 5 est sollicitée pour effectuer des traitements, elle demande à l'utilisateur 10, par exemple par le biais de l'interface 7, de s'authentifier (étape 106). Cette authentification peut prendre plusieurs formes : entrée d'un code PIN, entrée d'une empreinte biométrique ou faciale, etc. L'infrastructure de sécurité 5 va alors traiter l'élément d'authentification utilisé par l'utilisateur 10. Par exemple, si l'utilisateur s'authentifie en entrant son code PIN, le code entré par l'utilisateur 10 va alors être comparé au code PIN stocké dans l'infrastructure de sécurité 5.

L'utilisateur 10 correctement authentifié, l'infrastructure de sécurité 5 génère la clé de cryptage (étape 107) et crypte (étape 108) l'élément à crypter qui a été généré par le serveur d'application 6. Ensuite, la clé de cryptage générée est stockée (étape 109) dans l'infrastructure de sécurité 5 du terminal 1 et l'élément crypté est envoyé à l'application (étape 110). L'application 4 ou le serveur 6 stocke alors l'élément crypté (étape 111 ou étape 111').

L'élément de réinitialisation est ici une clé de cryptage qui est stockée de manière sécurisée par le terminal 1 dans l'infrastructure de sécurité 5

### Réinitialisation du secret applicatif

Un procédé de réinitialisation 200 d'un secret applicatif d'une application selon le premier mode de réalisation mettant en oeuvre l'élément de réinitialisation généré selon le premier mode de réinitialisation 100 est illustré sur la **figure 3****.**

L'utilisateur 10, qui peut être authentifié sur l'application (201) ou ne pas l'être, requiert au moyen de l'application 4 une réinitialisation du secret applicatif (étape 202). Ce peut également être l'application 4, ou le serveur d'application 6, qui est à l'initiative de la réinitialisation du secret applicatif, par exemple sur détection d'une activité anormale sur le compte de l'utilisateur.

L'application 4 requiert dans ce cas que l'infrastructure de sécurité 5 décrypte un élément de vérification crypté, stocké dans l'application 4 (étape 203) ou le serveur 6 (étape 203'). En d'autres termes, l'application 4 requiert de la part de l'infrastructure de sécurité 5 un traitement cryptographique de l'élément de vérification au moyen de l'élément de réinitialisation généré selon le premier mode de réalisation 100. Comme déjà indiqué, étant donné la configuration de la clé, dès lors que l'infrastructure de sécurité 5 est sollicitée, le terminal 1 va demander à l'utilisateur de s'authentifier.

Ainsi, cette requête déclenche une authentification de l'utilisateur sur le terminal (étape 204). Comme précédemment, cette authentification peut prendre plusieurs formes : entrée d'un code PIN, entrée d'une empreinte biométrique ou faciale, etc.

Une fois l'utilisateur 10 correctement authentifié, l'infrastructure de sécurité 5 récupère depuis l'application 4 (étape 205) ou le serveur 6 (étape 205') l'élément de vérification crypté.

Ensuite, à l'aide de la clé de cryptage générée à la génération de l'élément de réinitialisation, l'infrastructure de sécurité 5 procède au décryptage de l'élément de vérification (étape 206) et envoie l'élément de vérification ainsi décrypté, qui est un élément de validation de la réinitialisation, à l'application 4 (étape 207) qui l'envoie au serveur d'application 6 (étape 208).

Le serveur d'application 6 va alors comparer l'élément de vérification décrypté (c'est-à-dire l'élément de validation de la réinitialisation) à la copie de l'élément de vérification stocké au cours de la génération de l'élément de réinitialisation (étape 209).

S'il s'avère que l'élément de vérification décrypté correspond bien à sa copie stockée sur le serveur 6 alors le serveur 6 exécute un processus de réinitialisation du secret applicatif de l'application (étape 210).

Un tel processus de réinitialisation consiste en général à demander à l'utilisateur de redéfinir en partant de zéro le facteur en cours de réinitialisation. Par exemple, pour un code PIN, on demandera à l'utilisateur d'en redéfinir un en prenant en compte les contraintes de sécurité définies par le service. Cela peut se faire au sein de l'application ou bien on peut fournir un lien web à l'utilisateur qui remettrait à jour son secret sur l'interface web du service. Pour un facteur de possession externe (comme une clé matérielle par exemple), on demandera à l'utilisateur d'associer une nouvelle clé à son terminal (par exemple expédiée par courrier à l'utilisateur).

A l'issue de ce processus de réinitialisation, l'utilisateur 10 est en mesure de réinitialiser le secret applicatif de l'application.

### Deuxième mode de réalisation

### Génération de l'élément de réinitialisation

Un procédé de génération 300 d'un élément de réinitialisation selon un deuxième mode de réalisation est illustré sur la **figure 4****.**

Comme dans le premier mode de réalisation, la génération de l'élément de réinitialisation a lieu à la première exécution de l'application 4 sur le terminal 1 lorsque l'utilisateur 10 est correctement authentifié sur l'application 4 au moyen du secret applicatif (étape 301). Cette authentification peut prendre plusieurs formes : entrée d'un code PIN, entrée d'une empreinte biométrique ou faciale. L'authentification est identique quel que soit le mode de réalisation implémenté.

Dès que l'utilisateur s'est correctement identifié sur l'application, l'application 4 demande à l'infrastructure de sécurité 5 (étape 302) de générer un couple d'éléments de cryptage.

De préférence, un tel couple est un couple d'éléments de cryptage asymétrique : un premier élément étant un élément de cryptage public, un deuxième élément étant un élément de cryptage privé.

En variante, le couple est un couple d'éléments de cryptage symétrique : les deux éléments de cryptages sont les mêmes et doivent être protégés aussi bien l'un que l'autre (notion d'élément de cryptage « secret ») En variante, l'élément de cryptage symétrique est généré dans l'élément 6 et provisionné dans l'élément 5 de façon sécurisée (par exemple par une méthode dite « OTA » (Over The Air) c'est-à-dire de provisioning à distance.

Un élément de cryptage peut être une clé de cryptage secrète, publique ou privée selon les cas et éventuellement associée à d'autres éléments nécessaires à la bonne sécurité du protocole (comme le connais l'homme du métier), comme par exemple un compteur pour éviter les rejeux. Comme le sait l'homme du métier, ces différents éléments peuvent éventuellement être signés pour garantir leur provenance.

L'infrastructure de sécurité 5 génère alors le couple d'éléments de cryptage (étape 303) et transmet à l'application 4 un des deux éléments (étape 304), qui le transmet au serveur d'application 6 (étape 305). L'autre élément reste stocké dans l'infrastructure de sécurité 5 du terminal 1 (étape 306).

De manière préférée, dans le cas d'éléments de cryptage asymétrique, c'est l'élément de cryptage public, de préférence une clé de cryptage publique, qui est transmise au serveur 6 d'application. En conséquence, c'est l'élément de cryptage privé, de préférence une clé de cryptage privée, qui est stocké dans L'infrastructure de sécurité 5 du terminal 1.

De manière préférée, dans le cas d'éléments de cryptage symétrique, la clé secrète n'est transmise au serveur 6 d'application que si la confidentialité du transfert de bout en bout peut être assurée. Alternativement, c'est le serveur 6 qui génère la clé et la transfère à l'infrastructure de sécurité 5 du terminal 1.

Comme on l'aura compris, dans ce mode de réalisation, l'élément de réinitialisation est un élément de cryptage de type clé de cryptage et de préférence une clé de cryptage privée.

### Réinitialisation du secret applicatif

Un procédé 400 de réinitialisation d'un secret applicatif d'une application selon un deuxième mode de réalisation mettant en oeuvre l'élément de réinitialisation généré selon le deuxième mode de réinitialisation 300 est illustré sur la **figure 5****.**

Dans ce deuxième mode, un élément de vérification est généré par le serveur d'application 6 suite à une demande de réinitialisation du secret applicatif, sans être fourni à l'avance au terminal 10.

Comme dans le premier mode de réalisation, l'utilisateur 10 qui peut être authentifié sur l'application 4 (étape 401) ou ne pas l'être, requiert au moyen de l'application une réinitialisation du secret applicatif (étape 402). Ce peut également être l'application 4, ou le serveur d'application 6, qui est à l'initiative de la réinitialisation du secret applicatif, par exemple sur détection d'une activité anormale sur le compte de l'utilisateur.

L'application 4 demande au serveur d'application 6 qu'il génère un élément de vérification (étape 403). Le serveur 6 d'application envoie alors l'élément de vérification à l'application 4 (étape 404). Le serveur stocke ensuite une copie de l'élément de vérification (étape 405). De manière alternative, le serveur d'application 6 peut garder l'original et envoyer une copie.

L'application 4 demande alors à l'infrastructure de sécurité 5 de signer l'élément de vérification (étape 406) au moyen de l'élément de cryptage stocké dans l'infrastructure de sécurité 5. En d'autres termes, l'application 4 requiert de la part de l'infrastructure de sécurité 5 un traitement cryptographique de l'élément de vérification au moyen de l'élément de réinitialisation généré selon le deuxième mode de réalisation 300.

Comme déjà indiqué, l'infrastructure de sécurité 5 étant sollicitée, cette requête déclenche une authentification de l'utilisateur 10 sur le terminal 1 (étape 407). Comme précédemment, cette authentification peut prendre plusieurs formes : entrée d'un code PIN, entrée d'une empreinte biométrique ou faciale, etc.

Une fois l'utilisateur 10 correctement authentifié, l'infrastructure de sécurité 5 accède à l'élément de cryptage (étape 408) et signe l'élément de vérification au moyen de cet élément de cryptage (étape 409).

L'infrastructure de sécurité 5 envoie alors à l'application 4 l'élément de vérification signé (étape 410) qui l'envoie au serveur 6 d'application (étape 411).

Le serveur d'application 6 va alors vérifier la validité du traitement cryptographique opéré sur l'élément de vérification (étape 412) au moyen de l'élément de cryptage qu'il a stocké lors de l'étape 405 pour obtenir un élément de validation de la réinitialisation.
L'élément de validation de la réinitialisation est ici une information sur la validité du traitement cryptographique

Si la vérification est couronnée de succès et que l'élément de vérification est bien identique à la copie stockée dans le serveur d'application 6 alors ce dernier exécute un processus de réinitialisation du secret applicatif de l'application (étape 413).

Un tel processus de réinitialisation consiste en général à demander à l'utilisateur de redéfinir en partant de zéro le facteur en cours de réinitialisation. Par exemple, pour un code PIN, on demandera à l'utilisateur d'en redéfinir un en prenant en compte les contraintes de sécurité définies par le service. Cela peut se faire au sein de l'application ou bien on peut fournir un lien web à l'utilisateur qui remettrait à jour son secret sur l'interface web du service. Pour un facteur de possession externe (comme une clé matérielle par exemple), on demandera à l'utilisateur d'associer une nouvelle clé à son terminal (par exemple expédiée par courrier à l'utilisateur).

A l'issue de ce processus de réinitialisation, l'utilisateur est en mesure de réinitialiser le secret applicatif de l'application.

### Complément à l'un ou l'autre des procédés ci-dessus décrit

En plus de l'authentification de l'utilisateur à partir d'une donnée stockée dans le terminal, l'application ou l'infrastructure de sécurité peut authentifier (étapes 101', 201', 301', 401', 106', 204', 407') l'utilisateur au moyen d'un élément externe au terminal.

Un tel élément externe est par exemple un "dongle". Un autre exemple est la vérification de la présence de la bonne carte SIM ou du bon numéro de mobile.

En d'autres termes si on prend l'exemple que l'authentification de l'utilisateur s'effectue au moyen d'un code PIN entré par l'utilisateur, le terminal peut aussi vérifier l'insertion d'un "dongle". L'authentification est dans ce cas multi-facteurs et conserve avantageusement les autres facteurs que celui en cours de récupération pendant la phase de réinitialisation décrite précédemment.

## Revendications

1. Procédé de réinitialisation d'un secret applicatif d'une application exécutée par un terminal (1), ledit terminal (1) comprenant une infrastructure de sécurité (5) configuré pour gérer de manière sécurisée des données d'authentification d'un utilisateur (10) par le terminal (1), l'application étant connectée à un serveur d'application (6), le secret applicatif permettant à l'utilisateur (10) de s'authentifier (201, 201', 401, 401') sur l'application (4), ledit procédé comprenant après que l'utilisateur (10) a requis une réinitialisation (202, 402) du secret applicatif depuis l'application (4), les étapes suivantes mises en oeuvre par l'infrastructure de sécurité (5) :
- réception d'une requête (203, 406) d'un traitement cryptographique d'un élément de vérification au moyen d'un élément de réinitialisation du secret applicatif préalablement stocké dans l'infrastructure de sécurité (5) ;
- authentification (204, 204', 407, 407') de l'utilisateur (10) à partir d'au moins une donnée entrée par l'utilisateur (10) pour l'authentifier sur le terminal sans aucune donnée propre à l'application (4) et une donnée d'authentification stockée dans l'infrastructure de sécurité (5) ; et si l'utilisateur est authentifié par l'infrastructure de sécurité (5) ;
- traitement (206, 408-409) cryptographique de l'élément de vérification du secret applicatif de manière à obtenir un élément de validation de la réinitialisation ;
- envoi (207, 410) vers l'application (4) de l'élément de validation de la réinitialisation pour que le serveur d'application (6) valide l'élément de validation de la réinitialisation et, le cas échéant, exécute (210, 413) un processus de réinitialisation du secret applicatif.

2. Procédé selon la revendication 1, dans lequel un élément de vérification est un élément de vérification crypté et stocké dans le serveur d'application (6), l'élément de réinitialisation est une clé de cryptage stockée dans l'infrastructure de sécurité (5), procédé dans lequel l'étape de traitement (206) consiste à décrypter, au moyen de la clé de cryptage, l'élément de vérification crypté.

3. Procédé selon la revendication 1, dans lequel l'élément de réinitialisation est un premier élément de cryptage stocké dans l'infrastructure de sécurité (5), un deuxième élément de cryptage étant stocké dans le serveur d'application (6), l'étape de traitement consistant à signer (409) par le premier élément de cryptage l'élément de vérification, l'élément de vérification ainsi signé étant transmis (410) au serveur d'application (6) afin que ce dernier en vérifie la validité (412) au moyen du deuxième élément de cryptage

4. Procédé selon la revendication 3, dans lequel le premier élément de cryptage et le deuxième élément de cryptage sont des éléments de cryptage symétrique du type clés publiques.

5. Procédé selon la revendication 3, dans lequel le premier élément de cryptage et le deuxième élément de cryptage sont des éléments de cryptage asymétriques, le premier élément de cryptage étant de préférence une clé privée et le deuxième élément de cryptage étant une clé publique.

6. Procédé selon l'une des revendications précédentes, comprenant une étape d'authentification de l'utilisateur (10) au moyen d'un élément externe au terminal.

7. Procédé selon l'une des revendications précédentes, comprenant à la première exécution de l'application (4), l'utilisateur (10) étant authentifié (101, 301) sur l'application (4), les étapes suivantes mises en oeuvre par l'infrastructure de sécurité (5) :
- réception d'une demande (105, 302) de génération d'un élément de cryptage ;
- génération de l'élément de cryptage (107, 108, 303), ledit élément de cryptage comprenant au moins une première partie ;
- stockage (109, 306) de la première partie dans l'infrastructure de sécurité (5), ladite première partie constituant l'élément de réinitialisation.

8. Procédé selon la revendication 7, dans lequel l'élément de cryptage comprend une unique première partie et est une clé de cryptage, ledit procédé comprenant une étape de transmission (104) à l'application (4) d'un élément de vérification, l'élément généré étant une clé de cryptage, le procédé comprenant le cryptage (108) de l'élément de vérification, la transmission (110) à l'application (4) de l'élément de vérification ainsi crypté qui est destiné à être stocké (111, 111').

9. Procédé selon la revendication 7, dans lequel l'élément de cryptage est un couple d'éléments de cryptage comprenant une première partie et une deuxième partie, le procédé comprenant la transmission (304) à l'application (4) de la deuxième partie qui est destinée à être transmise (305) au serveur d'application (6).

10. Procédé selon l'une des revendications 7 à 8, comprenant, préalablement à la génération de l'élément de cryptage (107, 108), une étape d'authentification (106, 106') de l'utilisateur (10) à partir d'au moins une donnée entrée par l'utilisateur et une donnée d'authentification stockée dans l'infrastructure de sécurité (5).

11. Procédé selon la revendication 9, dans lequel le couple d'éléments de cryptage comprend un premier élément de cryptage et un deuxième élément de cryptage, ces éléments étant des éléments de cryptage asymétriques, le premier élément de cryptage étant une clé publique et le deuxième élément de cryptage étant une clé privée, l'élément de cryptage privé étant stocké (306) dans l'infrastructure de sécurité (5), l'élément de cryptage public étant transmis (305) au serveur d'application (6).

12. Procédé selon la revendication 9, dans lequel le couple d'éléments de cryptage sont des éléments de cryptage symétriques, un des deux éléments étant stocké (306) dans l'infrastructure de sécurité, l'autre étant transmis (305) au serveur d'application (6).

13. Infrastructure de sécurité (5) d'un terminal (1) configurée pour mettre en oeuvre un procédé (100, 200, 300, 400) selon l'une des revendications précédentes.

14. Produit programme d'ordinateur comprenant des instructions de code de programme pour l'exécution des étapes d'un procédé selon l'une des revendications 1 à 12, lorsque ce procédé est exécuté par un processeur (3).

## Patentansprüche

1. Verfahren zur Neuinitialisierung eines Anwendungsgeheimnisses einer von einem Endgerät (1) ausgeführten Anwendung, wobei das Endgerät (1) eine Sicherheitsinfrastruktur (5) umfasst, die dazu ausgestaltet ist, Daten zur Authentifizierung eines Benutzers (10) durch das Endgerät (1) auf sichere Weise zu verwalten, wobei die Anwendung mit einem Anwendungsserver (6) verbunden ist, wobei das Anwendungsgeheimnis es dem Benutzer (10) ermöglicht, sich in der Anwendung (4) zu authentifizieren (201, 201', 401, 401'), wobei das Verfahren, nachdem der Benutzer (10) eine Neuinitialisierung (202, 402) des Anwendungsgeheimnisses von der Anwendung (4) aus angefordert hat, die folgenden von der Sicherheitsinfrastruktur (5) durchgeführten Schritte umfasst:
- Empfangen einer Anforderung (203, 406) einer kryptographischen Verarbeitung eines Verifizierungselements mittels eines Elements zur Neuinitialisierung des Anwendungsgeheimnisses, das zuvor in der Sicherheitsinfrastruktur (5) gespeichert wurde;
- Authentifizieren (204, 204', 407, 407') des Benutzers (10) ausgehend von mindestens einer Dateninformation, die von dem Benutzer (10) eingegeben wird, um ihn auf dem Endgerät zu authentifizieren, ohne irgendeine für die Anwendung (4) spezifische Dateninformation und eine in der Sicherheitsinfrastruktur (5) gespeicherte Authentifizierungsdateninformation, und wenn der Benutzer durch die Sicherheitsinfrastruktur (5) authentifiziert wird:
- kryptographisches Verarbeiten (206, 408-409) des Verifizierungselements des Anwendungsgeheimnisses, so dass ein Element zur Validierung der Neuinitialisierung erhalten wird;
- Senden (207, 410) des Elements zur Validierung der Neuinitialisierung an die Anwendung (4), damit der Anwendungsserver (6) das Element zur Validierung der Neuinitialisierung validiert und, gegebenenfalls, einen Prozess zur Neuinitialisierung des Anwendungsgeheimnisses ausführt (210, 413).

2. Verfahren nach Anspruch 1, bei dem ein Verifizierungselement ein verschlüsseltes und in dem Anwendungsserver (6) gespeichertes Verifizierungselement ist, das Element zur Neuinitialisierung ein in der Sicherheitsinfrastruktur (5) gespeicherter Verschlüsselungsschlüssel ist, Verfahren, bei dem der Schritt des Verarbeitens (206) darin besteht, das verschlüsselte Verifizierungselement mittels des Verschlüsselungsschlüssels zu entschlüsseln.

3. Verfahren nach Anspruch 1, bei dem das Element zur Neuinitialisierung ein erstes Verschlüsselungselement ist, das in der Sicherheitsinfrastruktur (5) gespeichert ist, wobei ein zweites Verschlüsselungselement in dem Anwendungsserver (6) gespeichert ist, wobei der Schritt des Verarbeitens darin besteht, das Verifizierungselement durch das erste Verschlüsselungselement zu signieren (409), wobei das so signierte Verifizierungselement an den Anwendungsserver (6) übertragen wird (410), damit Letzterer mittels des zweiten Verschlüsselungselements seine Gültigkeit verifiziert (412)

4. Verfahren nach Anspruch 3, bei dem das erste Verschlüsselungselement und das zweite Verschlüsselungselement symmetrische Verschlüsselungselemente vom Typ öffentliche Schlüssel sind.

5. Verfahren nach Anspruch 3, bei dem das erste Verschlüsselungselement und das zweite Verschlüsselungselement asymmetrische Verschlüsselungselemente sind, wobei das erste Verschlüsselungselement bevorzugt ein privater Schlüssel ist und wobei das zweite Verschlüsselungselement ein öffentlicher Schlüssel ist.

6. Verfahren nach einem der vorhergehenden Ansprüche, umfassend einen Schritt des Authentifizierens des Benutzers (10) mittels eines endgeräteexternen Elements.

7. Verfahren nach einem der vorhergehenden Ansprüche, umfassend bei der ersten Ausführung der Anwendung (4), wenn der Benutzer (10) in der Anwendung (4) authentifiziert ist (101, 301), die folgenden von der Sicherheitsinfrastruktur (5) durchgeführten Schritte:
- Empfangen einer Aufforderung (105, 302) zum Erzeugen eines Verschlüsselungselements;
- Erzeugen des Verschlüsselungselements (107, 108, 303), wobei das Verschlüsselungselement mindestens einen ersten Teil umfasst;
- Speichern (109, 306) des ersten Teils in der Sicherheitsinfrastruktur (5), wobei der erste Teil das Element zur Neuinitialisierung bildet.

8. Verfahren nach Anspruch 7, bei dem das Verschlüsselungselements einen einzigen ersten Teil umfasst und ein Verschlüsselungsschlüssel ist, wobei das Verfahren einen Schritt des Übertragens (104) eines Verifizierungselements an die Anwendung (4) umfasst, wobei das erzeugte Element ein Verschlüsselungsschlüssel ist, wobei das Verfahren das Verschlüsseln (108) des Verifizierungselements umfasst, das Übertragen (110) an die Anwendung (4) des so verschlüsselten Verifizierungselements, das dazu bestimmt ist, gespeichert zu werden (111, 111').

9. Verfahren nach Anspruch 7, bei dem das Verschlüsselungselement ein Paar aus Verschlüsselungselementen ist, die einen ersten Teil und einen zweiten Teil umfassen, wobei das Verfahren das Übertragen (304) an die Anwendung (4) des zweiten Teils ist, der dazu bestimmt ist, an den Anwendungsserver (6) übertragen zu werden (305).

10. Verfahren nach einem der Ansprüche 7 bis 8, umfassend, vor dem Erzeugen des Verschlüsselungselements (107, 108), einen Schritt des Authentifizierens (106, 106') des Benutzers (10) ausgehend von mindestens einer von dem Benutzer eingegebenen Dateninformation und einer in der Sicherheitsinfrastruktur (5) gespeicherten Authentifizierungsdateninformation.

11. Verfahren nach Anspruch 9, bei dem das Paar aus Verschlüsselungselementen ein erstes Verschlüsselungselement und ein zweites Verschlüsselungselement umfasst, wobei diese Elemente asymmetrische Verschlüsselungselemente sind, wobei das erste Verschlüsselungselement ein öffentlicher Schlüssel ist und wobei das zweite Verschlüsselungselement ein privater Schlüssel ist, wobei das private Verschlüsselungselement in der Sicherheitsinfrastruktur (5) gespeichert wird (306), wobei das öffentliche Verschlüsselungselement an den Anwendungsserver (6) übertragen wird (305).

12. Verfahren nach Anspruch 9, bei dem das Paar aus Verschlüsselungselementen symmetrische Verschlüsselungselemente sind, wobei eines der beiden Elemente in der Sicherheitsinfrastruktur gespeichert wird (306), wobei das andere an den Anwendungsserver (6) übertragen wird (305).

13. Sicherheitsinfrastruktur (5) eines Endgeräts (1), die dazu ausgestaltet ist, ein Verfahren (100, 200, 300, 400) nach einem der vorhergehenden Ansprüche durchzuführen.

14. Computerprogrammprodukt, das Programmcodeanweisungen umfasst, die bei der Ausführung dieses Verfahrens durch einen Prozessor (3) die Schritte eines Verfahrens nach einem der Ansprüche 1 bis 12 ausführen.

## Claims

1. Method for resetting an application secret of an application executed by a terminal (1), said terminal (1) comprising a security infrastructure (5) configured to securely manage data for authentication of a user (10) by the terminal (1), the application being connected to an application server (6), the application secret allowing the user (10) to authenticate themself (201, 201', 401, 401') in the application (4), said method comprising, after the user (10) has requested a reset (202, 402) of the application secret from the application (4), the following steps implemented by the security infrastructure (5) :
- receiving a request (203, 406) for cryptographic processing of a verification element by means of a reset element for the application secret previously stored in the security infrastructure (5);
- authenticating (204, 204', 407, 407') the user (10) on the basis of at least one datum entered by the user (10) to authenticate said user on the terminal without any data specific to the application (4) and one authentication datum stored in the security infrastructure (5); and if the user is authenticated by the security infrastructure (5);
- cryptographic processing (206, 408-409) of the verification element for the application secret so as to obtain a validation element for the reset;
- sending (207, 410), to the application (4), the validation element for the reset so that the application server (6) validates the validation element for the reset and, where applicable, executes (210, 413) a process for resetting the application secret.

2. Method according to Claim 1, wherein a verification element is a verification element that is encrypted and stored in the application server (6), the reset element is an encryption key stored in the security infrastructure (5), in which method the processing step (206) consists in decrypting, by means of the encryption key, the encrypted verification element.

3. Method according to Claim 1, wherein the reset element is a first encryption element stored in the security infrastructure (5), a second encryption element being stored in the application server (6), the processing step consisting in signing (409), by means of the first encryption element, the verification element, the verification element thus signed being transmitted (410) to the application server (6) so that the latter verifies the validity thereof (412) by means of the second encryption element.

4. Method according to Claim 3, wherein the first encryption element and the second encryption element are symmetric encryption elements of the type of public keys.

5. Method according to Claim 3, wherein the first encryption element and the second encryption element are asymmetric encryption elements, the first encryption element preferably being a private key and the second encryption element being a public key.

6. Method according to one of the preceding claims, comprising a step of authenticating the user (10) by means of an element external to the terminal.

7. Method according to one of the preceding claims, comprising, the first time the application (4) is executed, the user (10) being authenticated (101, 301) in the application (4), the following steps implemented by the security infrastructure (5):
- receiving a request (105, 302) to generate an encryption element;
- generating the encryption element (107, 108, 303), said encryption element comprising at least a first portion;
- storing (109, 306) the first portion in the security infrastructure (5), said first portion constituting the reset element.

8. Method according to Claim 7, wherein the encryption element comprises a single first portion and is an encryption key, said method comprising a step of transmitting (104), to the application (4), a verification element, the generated element being an encryption key, the method comprising the encryption (108) of the verification element, the transmission (110), to the application (4), of the verification element thus encrypted which is intended to be stored (111, 111').

9. Method according to Claim 7, wherein the encryption element is a pair of encryption elements comprising a first portion and a second portion, the method comprising the transmission (304), to the application (4), of the second portion which is intended to be transmitted (305) to the application server (6).

10. Method according to either of Claims 7 and 8, comprising, prior to the generation of the encryption element (107, 108), a step of authenticating (106, 106') the user (10) on the basis of at least one datum entered by the user and one authentication datum stored in the security infrastructure (5).

11. Method according to Claim 9, wherein the pair of encryption elements comprises a first encryption element and a second encryption element, these elements being asymmetric encryption elements, the first encryption element being a public key and the second encryption element being a private key, the private encryption element being stored (306) in the security infrastructure (5), the public encryption element being transmitted (305) to the application server (6).

12. Method according to Claim 9, wherein the pair of encryption elements are symmetric encryption elements, one of the two elements being stored (306) in the security infrastructure, the other being transmitted (305) to the application server (6).

13. Security infrastructure (5) of a terminal (1), configured to implement a method (100, 200, 300, 400) according to one of the preceding claims.

14. Computer program product comprising program code instructions for executing the steps of a method according to any one of Claims 1 to 12 when this method is executed by a processor (3).
